# EUROPEAN PATENT SPECIFICATION

(11) **EP 3 516 903 B1**
(45) Date of publication and mention of the grant of the patent: **17.08.2022**
(21) Application number: 16774641.1
(22) Date of filing: 23.09.2016
(51) Int. Cl.: H04W 48/12, H04W 72/04, H04W 72/12, H04W 74/00

(54) **RADIO CONFIGURATION FOR MACHINE TYPE COMMUNICATIONS**
FUNKKONFIGURATION FÜR MASCHINENKOMMUNIKATIONEN
CONFIGURATION RADIO POUR DES COMMUNICATIONS DE TYPE MACHINE

(43) Date of publication of application: 31.07.2019
(73) Proprietor: Nokia Solutions and Networks Oy, 02610 Espoo (FI)
(72) Inventor: KOVACS, Istvan Zsolt, 9000 Aalborg (DK); MOGENSEN, Preben Elgaard, 9260 Gistrup (DK); JACOBSEN, Thomas, 9220 Aalborg Ost (DK)
(74) Representative: Nokia EPO representatives
(86) International application number: PCT/EP2016/072631
(87) International publication number: WO 2018/054475

(56) References cited:
- EP-A1- 2 192 807
- EP-A1- 2 624 598
- WO-A1-2012/101394
- WO-A1-2015/070903
- WO-A1-2015/113688
- US-A1- 2015 304 883

## Description

### BACKGROUND:

### Field:

Various communication systems may benefit from an improved signaling protocol. For example, machine type communications may benefit from a priori radio configuration.

### Description of the Related Art:

3rd Generation Partnership Project (3GPP) New Radio (NR) technology, such as 5th generation (5G) technology, has been focused on massive radio access solutions that target machine type communications. 5G provides support for Machine-Type-Communication (MTC). MTC involves data communication that involves one or more entities that do not necessarily need human interaction. MTC can be characterized as having a large number of communication terminals, with each terminal having little traffic.

Contention based (CS) radio access solutions attempt to reduce the signaling overhead from traditional RRC configuration and setup. CS radio access solutions assume that a MTC device or user equipment (UE) is either pre-configured to include radio access parameters, or can be signaled the relevant radio access parameters. Because the relevant radio access parameters may be signaled, the parameters can be adapted by the radio access network (RAN) according to the overall traffic load or traffic demand. While signaling information using, for example, a multicast channel or a broadcast channel may have a reduced overhead compared to dedicated radio resource control (RRC) signaling, MTC UEs still dedicate significant time and/or data resources towards listening to and receiving such signals.

The MTC UEs may have to synchronize, listen, and decode the relevant information block, and perform these operations potentially with a higher frequency than the actual data that may be transmitted to the UE. For MTC UEs with low data rate requirements, and infrequent data transmissions, such higher frequency operations may reduce both the radio coverage and the battery life of the MTC UE.

EP 2624598 A1 relates to a radio device, which is configured to initiate a transmission of application output data in communication with a radio access network in accordance with a predetermined application transmission schedule.

WO 2012/101394 A1 discloses a method and apparatus for temporarily and dynamically allocating radio resources to machine-type-communication (MTC) devices and human-to-human (H2H) devices.

### SUMMARY:

A method, in a first aspect, includes receiving at a user equipment a signal comprising a radio configuration time trace parameter from a base station. The radio configuration time trace parameter defines a sequence or list of future, time-limited radio configurations to be used by the user equipment during time steps of a time period. The method also includes, for a time step amongst the time steps, determining at the user equipment a radio access action to be carried out by the user equipment based on a comparison between a value generated by the user equipment and a threshold value for the time step received in the radio configuration time trace parameter, wherein the radio access action comprises triggering an uplink radio access. In addition, the method includes using the radio configurations to carry out the determined radio access action.

A user equipment apparatus, in a second aspect, includes means for performing a process according to the first aspect.

According to a third aspect, there is provided a non-transitory computer-readable medium encoding instructions that, when executed in hardware of a user equipment, cause the user equipment to perform a process according to the first aspect.

A method, in a fourth aspect, includes generating at a base station a radio configuration time trace parameter. The radio configuration time trace parameter defines a sequence or list of future, time-limited radio configurations to be used by a user equipment during time steps of a time period in determining a radio access action, wherein the radio access action comprises triggering an uplink radio access. The method also includes signaling the radio configuration time trace parameter to the user equipment, wherein the signaling comprises sending a threshold value for a time step of the time steps for the user equipment to compare with a value generated by the user equipment for the time step to determine whether to carry out the radio access action.

A base station apparatus, in a fifth aspect, includes means for performing a process according to the fourth aspect.

According to a sixth aspect, there is provided a non-transitory computer-readable medium encoding instructions that, when executed in hardware of a base station, cause the base station to perform a process according to the fourth aspect.

### BRIEF DESCRIPTION OF THE DRAWINGS:

For proper understanding of the invention, reference should be made to the accompanying drawings, wherein:
Figure 1 illustrates a signal flow diagram.
Figure 2 illustrates a diagram.
Figure 3 illustrates a signal flow.
Figure 4 illustrates a diagram.
Figure 5A illustrates a diagram.
Figure 5B illustrates a diagram.
Figure 5C illustrates a diagram.
Figure 5D illustrates a diagram.
Figure 6 illustrates a diagram according to certain embodiments.
Figure 7 illustrates a flow diagram.
Figure 8 illustrates a flow diagram.
Figure 9 illustrates a system.

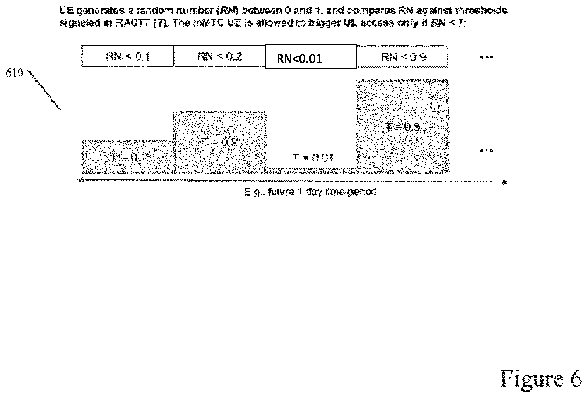

The invention is shown in the embodiment of figure 6. All further references to embodiments are to be understood as examples useful for understanding the invention.

### DETAILED DESCRIPTION:

Certain embodiments can help to reduce the signaling overhead of traditional RRC configuration and setup, as well as of traditional scheduling signals. In particular, certain embodiments provide for signaling to and from a TC UE that can help minimize the energy consumed by either reading or decoding signaling information. The MTC UE may use the energy saved in certain embodiments to provide for more power in coverage challenged locations.

In some embodiments, an in-advance or a priori configuration mechanism is used for the MTC UE. In such embodiments, a RAN signal sends a sequence or list of radio configuration options to be used by the MTC UE during a future, limited time-period. The radio configuration options may include a time-sequence or trace of radio activity configuration parameters that may be used by the UE to determine whether or not to trigger an UL radio access. In other embodiments, radio configuration options may include radio access configuration that may be used by the MTC UE during a future, limited time-period. The radio access configuration options may be used to configure uplink or downlink transmissions in each radio access instance. The RAN signal or the radio configuration

Certain embodiments can help to reduce the signaling overhead of traditional RRC configuration and setup, as well as of traditional scheduling signals. In particular, certain embodiments provide for signaling to and from a TC UE that can help minimize the energy consumed by either reading or decoding signaling information. The MTC UE may use the energy saved in certain embodiments to provide for more power in coverage challenged locations.

In some embodiments, an in-advance or a priori configuration mechanism may be used for the MTC UE. In such embodiments, a RAN signal may send a sequence or list of radio configuration options to be used by the MTC UE during a future, limited time-period. The radio configuration options may include a time-sequence or trace of radio activity configuration parameters that may be used by the UE to determine whether or not to trigger an UL radio access. In other embodiments, radio configuration options may include radio access configuration that may be used by the MTC UE during a future, limited time-period. The radio access configuration options may be used to configure uplink or downlink transmissions in each radio access instance. The RAN signal or the radio configuration options may be refreshed at a low frequency.

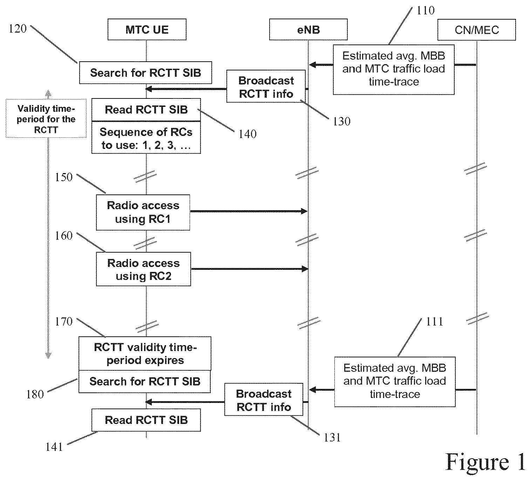

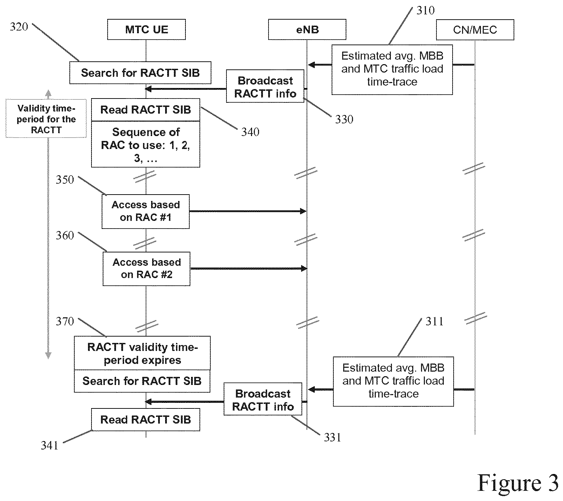

Figure 1 illustrates a signal flow diagram according to certain embodiments. In step 120, an MTC UE may search for a radio configuration time trace (RCTT) system information block (SIB). The RCTT SIB, for example, may include radio access radio access configuration parameters. In some other embodiments, as shown in Figure 3, for example, the MTC UE may search for a radio activity configuration time trace (RACTT). In step 130, a base station may generate the RCTT parameter to be used by the UE. A base station, for example, may be an access node, a 5G Node B (5GNB), an LTE evolved NodeB (eNB), server, host, or any of the other access or network nodes discussed herein.

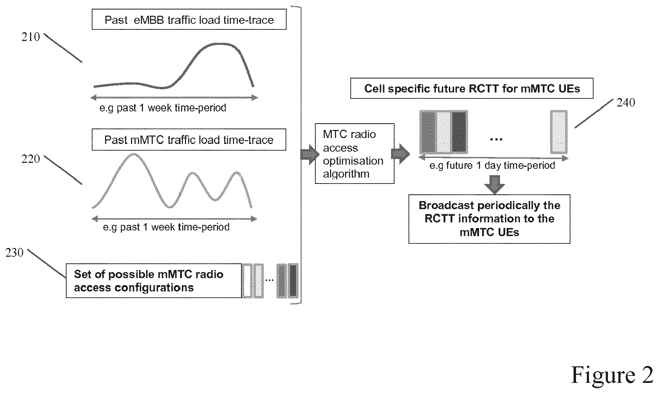

The RCTT parameter may be generated based on the estimated average mobile broadband (MBB) and/or MTC traffic load time-trace, as shown in step 110. In other words, the RCTT may be generated using history or past MBB and/or MTC statistics. The estimated average MBB and/or MTC traffic load may be received by the base station from a core network (CN) entity and/or using mobile edge computing (MEC). As shown in Figure 2, the MBB and MTC traffic load time-trace may be combined.

The generated RCTT parameter includes future, time-limited radio configuration options for the UE. The RCTT parameter, in certain embodiments, may only be valid for a pre-determined amount of time. The RCTT parameter is then signaled from the base station to the MTC UE. The signal may be a broadcast, a multicast, or a unicast signal. In certain embodiments, the signaled RCTT parameter may be used by a single MTC UE in a cell, while in other embodiments the RCTT parameter may be used by all or by a subset of the MTC UEs in a given cell. The subset may include a plurality of UEs.

In certain embodiments, the RCTT parameter may have an associated validity start time and/or stop time. In other embodiments, the RCTT parameter may have a validity time- period from the time of signaling. For example, the RCTT parameter may only be valid for 1 day after the RCTT has been signaled. Upon the expiration of the validity period or the passing of the validity stop time, the MTC UE may no longer use the RCTT parameter, as shown in step 170.

The periodicity of the RCTT parameter can be determined and set by the base station. A value of the periodicity of the RCTT parameter can be stored and/or included as part of the RCTT information itself. For example, the RCTT parameter may be included as part of control information located within a data packet that includes RCTT information. The time granularity of the time trace may also be part of the RCTT information itself.

In step 140, the UE receives the RCTT parameter from the base station. In some embodiments, the UE may listen periodically for the RCTT parameter transmitted by the serving base station. The UE may then decode the received RCTT parameter or RCTT information. Based on the RCTT SIB. and the information contained therein, the TC UE may become aware of when the configuration information may be refreshed, and for how long the RCTT parameter can be valid. Due to the RCTT SIB, the UE may in certain embodiment know when new or refreshed radio configuration options may be received, and need not search for such configuration options until before the expiration of the RCTT parameter.

In steps 150 and 160, the MTC UE may use the radio configuration options specified in RCTT for scheduling and setting up each of the radio access instances. Once the validity time-period of the RCTT parameter expires, or a determined amount of time before the validity time-period expires, the UE may again search for RCTT SIB, as shown in step 180. For example, the UE may again search for RCTT SIB in the beginning of the last time-step or granularity before the ends of the validity time period of the current RCTT. In step 131 , the base station may signal the MTC UE the refreshed or new RCTT parameter. The RCTT parameter may be based on estimated average MMB and MTC traffic load time-trace, received at the base station in step 1 1 1. The UE may then read the received RCTT SIB, as shown in step 141 .

In accordance with the embodiment shown in Figure 1, the base station and the UE may both be configured via radio configuration options that can provide the UE and the base station with a specific sequence of access parameters. In certain embodiments, the sequence may help to reduce the decoding complexity of the UE uplink transmission, on the base station side. Further, because the UE may be aware of the expiration of the validity time-period of the RCTT parameter, the UE may know when to expect a signal from the base station that includes refreshed or new RCTT parameter. The UE can in some embodiments schedule to search for signals before the expiration of the validity time-period, which lowers the frequency of the UE listening and helps to extend battery life of the UE. Before the expiration, for example, may mean that the UE can again search for RCTT SIB in the beginning of the last time-step or granularity before the end of the validity time period of the current RCTT. Certain embodiments can allow for more frequent UE searching and/or listening than the expiration of the validity time-period.

The RCTT parameters and selected radio configuration options may be used by MTC UEs to estimate the expected uplink interference. For example, in embodiments in which the radio configuration options are radio access configurations, the MTC UE may use the radio access configuration to estimate the expected uplink interference, such as the number of simultaneous UEs attempting to access the base station. The expected uplink interference may then be used to adjust the transmission power levels of the user equipment. In certain embodiments, the expected uplink interference may also be used to pre-set or pre-determine downlink paging and/or access configurations of a specific TC UE per cell or a specific MTC UE per tracking area.

The base station, or any other network entity, may select the radio access configuration to be used by the MTC UEs in a given cell, or a subset of the UEs in the cell. The determination may be based on various types of input information available in the RAN. The information may be received at the base station from the CN using MEC, as shown in steps 110 and 11 1 of Figure 1.

In certain embodiments, the input information may be historical traffic data or statistics. For example, the historical traffic data may be a load time-characterization for enhanced MBB (eMBB), massive MTC (mMTC), or eMBB and mMTC. The historical traffic data may, in some embodiments, correspond to a certain time-period in the past, for example, a 1 week period at any point in time. In certain embodiments, any historic traffic data from any period of time in the past may be used. The historical traffic data may be used by the base station, or another network entity, to estimate the expected traffic load statistics for a future, time-limited period. The future, time-limited period may be, for example, the next 6 hours. In some embodiments, for example, the 6 hours may represent that periodicity of the time-limited radio configuration.

The estimation of the expected traffic load may then be used to derive the corresponding optimal radio access configuration to be used by the mMTC UE during a future, time-limited period. In other words, the historical traffic data may be used by the base station to generate the radio configuration time trace parameter, as well as the periodicity of a time-limited radio configuration options.

As discussed above, in certain embodiments, the radio access configuration may be based on historical or past characterization of the mMTC or the eMBB traffic load versus time. The base station may use the historical or past mMTC or eMBB traffic load time- characterization to estimate future, time-limited radio configuration options of the mMTC traffic load. In certain embodiments, the base station may combine an estimated future, time- limited characterization of the mMTC traffic load with the set of available radio configuration options for the mMTC. This combination may generate a future, time-limited RCTT that may be used by the mMTC UEs.

Figure 2 illustrates a diagram according to certain embodiments. In particular, Figure 2 illustrates combining past eMBB traffic load time-trace 210 and past mMTC traffic load time-trace 220 from the past week. This combination of eMBB and mMTC may then be combined with a set of possible mMTC radio access configurations 230. The combination of eMBB 210, mMTC 220, and radio access configurations 230 may be combined in any way possible, for example, using a combination algorithm, to optimization the radio access. The combination may also be used to determine cell specific future RCTT parameters 240 for mMTC UEs. The future RCTT 240 may be valid for a given period of time, for example, a 1 day time-period. Future RCTT parameters 240 may then be periodically broadcasted to the mMTC UEs, upon the expiration of the validity period of the previous RCTT parameters. The radio access configurations may include both uplink and downlink parameters.

The radio access configuration may be implemented in the form of indices, each index, for example, comprising of 2 or 3 bits, into the pre-defined and standardized table of possible radio access configurations. In certain embodiments, the standardized table may be similar to a channel quality indicator (CQI) table. The time granularity of the RCTT parameter, for example, may determine the amount of information to be signaled to the at least one MTC UE. For example, when the granularity is 2 bits x 24 hours, for a total of 48 bits, in a time- period of 24 hours having a 1 hour granularity and a 2 bits radio access configuration index.

The embodiments illustrated in Figures 1 and 2 both detail an in-advance or a priori configuration mechanism for the mMTC UEs where the RAN signals have a low refresh frequency, and a sequence or list of radio access configuration options may be used by at least one MTC UE during a future, limited time-period. The radio access configuration options may be included in the radio configuration time trace, and may be used to reduce the overhead for scheduling signaling.

In certain embodiments, rather than radio access configurations, radio activity configurations may be signaled in order to reduce the signaling overhead of traditional RRC configuration and setup. For example, the base station may signal at least one MTC UE a time-sequence or trace of radio activity configuration parameters to be used by the MTC UE during a future, limited time period.

Figure 3 illustrates a signal flow diagram according to certain embodiments. In certain embodiments, a base station, for example an eNB, may use a set of radio activity configuration options for mMTC access. The radio activity configurations may be used for uplink access. In some embodiments, a "null" radio activity configuration can indicate that no transmissions are possible. In step 310, the CN using MEC may send to the eNB an estimated average MBB and/or MTC traffic load time-trace. The MBB and/or MTC traffic load time-trace may be used to generate a future, time-limited radio activity control time trace (RACTT) parameter. In other embodiments, the eNB may receive an MMB and/or MTC traffic load data. The eNB may then use the received traffic load time-trace to determine an estimated average MBB and/or MTC traffic load time-trace.

In step 320, the MTC UE may search for a RACTT SIB. In step 330, the base station may then signal the RACTT parameter to at least one MTC UE. The signal may be broadcast, multicast, or unicast to all, some, or a single MTC UE in a cell. In certain embodiments, the RACTT information can also be transmitted via dedicated signaling. Similar to RCTT shown in Figure 1 , each set of RACTT information may have an associated validity start time and/or stop time. In other embodiments, the RACTT parameter may have a validity time-period from the time of signaling. The time granularity of the time trace may be part of the RACTT parameters itself. The radio activity configuration list included in the RACTT parameter may be updated by the RAN before the validity time period expires.

The MTC UE may listen periodically for the RACTT parameter or information transmitted by the serving base station. Upon receiving the RACTT parameter or information, the MTC UE may read the RACTT SIB, as shown in step 340. After decoding the first RACTT parameter, the UE may become aware of when the information will be refreshed by the eNB and/or for how long the configuration included in the RACTT will be valid. In certain embodiments, the MTC UE may use this information, and only search for RACTT parameter before the expiration of time of the configurations within the RACTT. In some embodiments, the UE may determine the probability of initiating the uplink radio access, as shown in Figure 6.

In certain embodiments, the RACTT may include radio configuration options, such as a radio activity configuration. UE may use the radio activity configuration specified and included in the RACTT within the validity time period to determine a radio access action. A radio access action, for example, may include determining whether or not to trigger UL radio access or configuring a radio access instance. As shown in steps 350 and 360 the UE may access the base station based on radio activity configuration (RAC). In step 370, the validity time period of the RACTT parameter expires. Before the expiration of the RACTT parameter, however, the MTC UE may search for a new or refreshed RACTT SIB.

In other words, upon the expiration of the validity time period of the RACTT parameter, the eNB may receive a new estimated average MBB and/or MTC traffic load time-trace from the CN, as shown in step 311 . The eNB may then generate the RACTT parameter based on the received MBB and/or MTC traffic load time-race, and signal the RACTT information or parameter to the at least one MTC UE, in step 331 . In step 341 , the RACTT parameter may receive and read the signaled RACTT SIB.

In certain embodiments, because the UE may be aware or expect when the RACTT information or parameter will be refreshed by the base station and/or for how long the RACTT information or parameter will be valid, the UE can search for the RACTT parameter before the expected time of expiration. Being aware of the validity period of the RACTT parameter may help the UE limit its search for RACTT SIB, which can help to extend the MTC UE battery life time. The battery life of the UE, as well as the base station, may also be extended because during the validity time period of the RACTT parameter, both the base station and UE are configured to use the specific sequence access parameter, which may help to reduce the decoding complexity for the UE uplink transmission.

In some embodiments, the RACTT parameter may be used by the mMTC UEs to estimate the expected uplink or downlink interference in the cell, and may be used to better adjust the transmission power levels of the MTC UE, such as the uplink power control.

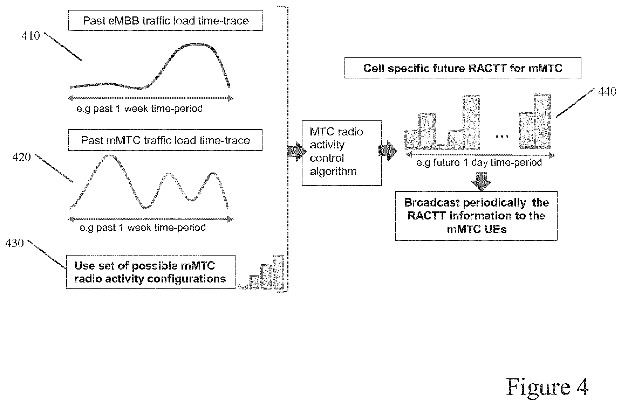

Figure 4 illustrates a diagram according to certain embodiments. In particular, Figure 4 illustrates the selection of radio activity configurations to be used by the MTC UE, or a subset of MTC UEs in a cell, based on various types of input information available in the RAN and/or CN. For example, one input may be the use of historical traffic statistics, such as past eMBB traffic load time-trace 410 and/or past mMTC traffic load time-trace 420. The historical traffic statistics may be combined with a set of possible mMTC radio activity configurations 430. In certain embodiments, the inputs may be combined using an MTC radio activity control algorithm.

The combination of the historical traffic statistics and the possible mMTC radio activity configurations may be used to estimate the expected traffic load statistics for a future time period. In other words, the combination of the historical traffic statistics and the possible mMTC radio activity configuration may be used to derive the corresponding optimal radio activity configuration 440 to be used by the mMTC UEs in a future, limited time-period. The RACTT may be periodically signaled to at least one mMTC UE.

As shown in Figure 4, historical or past characterization of the mMTC and/or the eMBB traffic loads may be used. In addition, in certain embodiments, historical or past characterization of the mMTC random access channel (RACH) occupancy or load may be used. The above historical or past characterizations may be combined with the set of possible mMTC radio activity configurations to estimate a future, time-limited characterization of the mMTC traffic load, and to generate a future, time-limited RACTT to be used by the mMTC UEs.

The time granularity of the RACTT, for example, may determine the amount of information to be signaled to the at least one MTC UE. For example, when the granularity is 2 bits X 24 hours, for a total of 48 bits, in a time-period of 24 hours having a 1 hour granularity and a 2 bits radio access configuration index. In certain embodiments, the radio activity configuration information can be implemented in the form of indices, for example indices of 2 or 3 bits, into a pre-defined and standardized table of possible radio activity configurations.

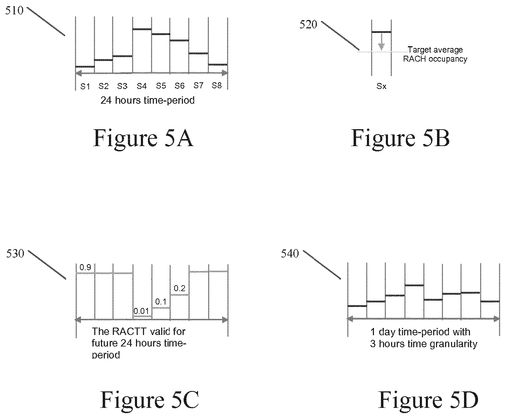

Figures 5A, 5B, 5C, and 5D illustrate diagrams according to certain embodiments. Specifically, Figures 5A, 5B, 5C, and 5D show an example of how a base station may go about determining a radio activity configuration. In some embodiments, the determining of the radio activity configuration may be executed continuously in the base station. In embodiments that utilize an activity control algorithm, the inputs of the algorithm may be at least one of historical or past characterization of the TC RACH occupancy or load, and the use of four different radio activity thresholds for triggering uplink access. The thresholds, for example, may be defined as one percent, ten percent, twenty percent, and ninety percent access probability options.

In certain embodiments, a control algorithm in the base station or another network entity may be used to average out or flatten the peaks in RACH occupancy time trace by generating a RACTT parameter. In the time steps in which high RACH occupancy peaks have been detected in the historical data, the algorithm may set a low T value, T being the uplink or downlink access probability threshold. A higher T value, on the other hand, can be set in the timeslots which have been previously detected with low RACH occupancy. The algorithm may include an assumption that the devices which are now allowed to perform uplink access in the time steps with low T may re-try to access the network in the time steps with higher T.

The control algorithm may monitor and update past historical time trace of MTC RACH occupancy or load values to generate new RACTT parameter. In Figure 5A, the control algorithm may collect past MTC RACH occupancy time-trace 510 for a 24 hour time- period divided into 8 time steps, S1 through S8. Each time step may be 3 hours long. In other words, while the periodicity may be 24 hours, the granularity may be 3 hours. The RACH occupancy in time step may then be compared with a pre-defined target occupancy value 520, as shown in Figure 5B. Access probability threshold values may then be assigned for each time step (Tx) such that the estimated occupancy is decreased or increased to become closer to the pre-defined target value, as shown in diagram 530 in Figure 5C. For example, step 1 is assigned an access probability of .9, while step 4 is assigned a probability of .1.

The base station generates the RACTT from the set of available threshold values for each time step, and signals the RACTT to at least one MTC UE. The validity timer, which defines the time for which the activity configuration information in the RACTT remains valid, may be set as the end of the next 24 hour time period. During the next 24 hour time period, all MTC UEs perform radio access according to the signaled RACTT. Once the time period expires, or before the expiration, the algorithm may repeat and collected past MTC RACH occupancy time-trace for a 24 hour time-period as shown in diagram 540 of Figure 5D.

Figure 6 illustrates an embodiment according to certain embodiments. In particular, Figure 6 illustrates examples of how RACTT information is interpreted by the uplink radio access probability for MTC UL access with four activity threshold values. The MTC UE generates a random number (RN) between 0 and 1. The generated RN is then compared against thresholds signaled in RACTT. The TC UE may trigger uplink access if RN is less than T.

Table 610 includes possible RACTT information interpretation as uplink radio access probability for MTC UL access. In the first example, in which T equals .1 , any RN that is less than .1 will trigger uplink access by the UE. In other examples shown in Table 6, threshold T may be .2, .01 , and .9. According to such threshold values, an RN of less than .2, .01 , and .9, respectively, may trigger the UL access.

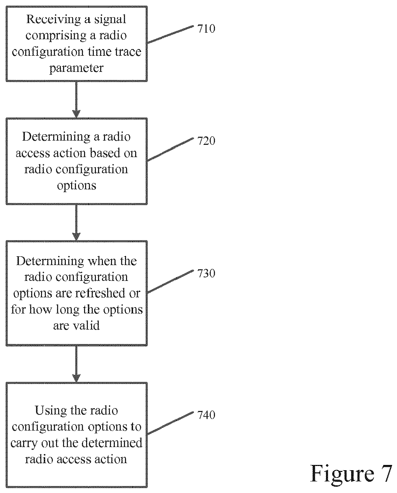

Figure 7 illustrates a flow diagram according to certain embodiments. In particular, Figure 7 illustrates an embodiment of the UE. In certain embodiments, the UE receives a signal comprising a radio configuration time trace parameter, as shown in step 710. The radio configuration time trace parameter may be either a RCTT or a RACTT. The radio configuration time trace parameter defines future, time-limited radio configuration options for a UE. The configuration options, for example, may include a radio activity configuration and/or a radio access configuration.

The UE determines a radio access action based on the received radio configuration options, as shown in step 720. When the radio configuration options include a radio activity configuration, the radio access action includes triggering an uplink radio access. The UE therefore uses the radio configuration options to carry out the determined radio access action.

In addition, based on the received RCTT or RACTT in step 710, the UE may determine when the radio configuration options are to be refreshed, or for how long the radio configuration options will be valid, as shown in step 730. Before the expiration of the validity of the radio configuration options, the UE may search and/or receive refreshed or new RCTT or RACTT information from the base station. In step 740, the UE may use the radio configuration options to carry out the determined radio access action.

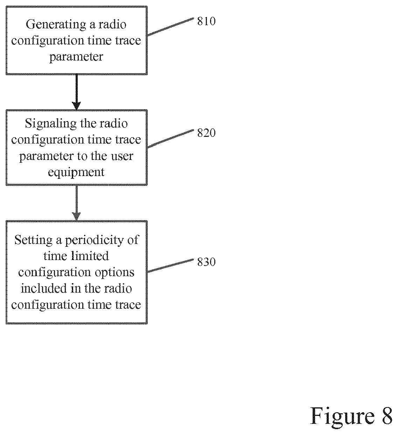

Figure 8 illustrates a flow diagram according to certain embodiments. In particular, Figure 8 illustrates an embodiment of the base station. The base station may use historical or past MBB and/or MTC traffic load time trace to generate a RCTT or a RACTT, as shown in step 810. In some embodiments, the base station may also take into consideration or use historical or past characterization of MTC RACH occupancy or load to generate the radio configuration time trace parameter or a radio configuration activity time trace parameter.

The radio configuration time trace parameter defines future, time-limited radio configuration options for the UE. When the radio configuration options include a radio activity configuration, the radio access action includes triggering an uplink radio access. In step 820, the base station signals the RCTT or the RACTT to the UE. The signal may be a broadcast, multicast, or unicast, and may be used by a single UE, all UEs, or a set of UEs within a cell.

In certain embodiments, the base station may set or determine a periodicity of time- limited configuration options, which can be included in the radio configuration time trace parameter, as shown in step 830. The UE may then use the periodicity to determine when to search for a refreshed or new RCTT or RACTT. Because the UE may know when to search for the RCTT or RACTT, it may not need to consistently search for a signal from the base station, which can prolong the UE battery life.

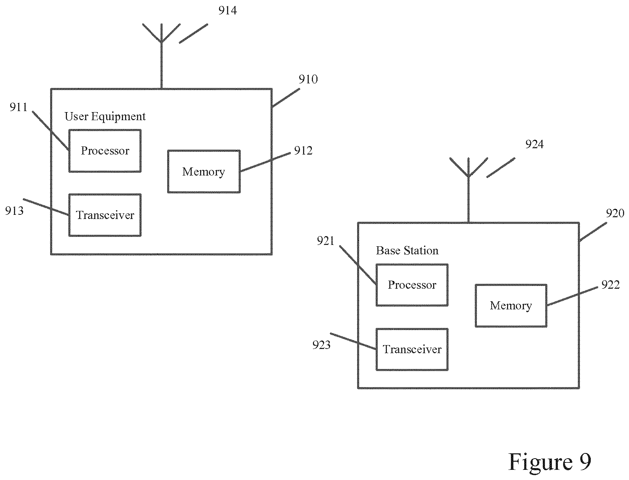

Figure 9 illustrates a system according to certain embodiments. It should be understood that each of the signals and functions shown in Figures 1. 2, 3, 4, 5A, 5B, 5C, 5D, 6, 7, and 8 may be implemented by various means or their combinations, such as hardware, software, firmware, one or more processors and/or circuitry. In one embodiment, a system may include several devices, such as, for example, base station 920 or UE 910. The system may include more than one UE 910 and more than one network node 920, although only one access node shown for the purposes of illustration. A base station may be an access node, a 5G NodeB (5GNB), an eNB, server, host, or any of the other access or network node as discussed herein.

Each of these devices may include at least one processor or control unit or module, respectively indicated as 91 1 and 921. At least one memory may be provided in each device, and indicated as 912 and 922, respectively. The memory may include computer program instructions or computer code contained therein. One or more transceiver 913 and 923 may be provided, and each device may also include an antenna, respectively illustrated as 914 and 924. Although only one antenna each is shown, many antennas and multiple antenna elements may be provided to each of the devices. Other configurations of these devices may be provided. For example, network entity 920 and UE 910 may be additionally configured for wired communication, in addition to wireless communication, and in such a case antennas 914 and 924 may illustrate any form of communication hardware, without being limited to merely an antenna.

Transceivers 913 and 923 may each, independently, be a transmitter, a receiver, or both a transmitter and a receiver, or a unit or device that may be configured both for transmission and reception. The transmitter and/or receiver (as far as radio parts are concerned) may also be implemented as a remote radio head which is not located in the device itself, but in a mast, for example. The operations and functionalities may be performed in different entities, such as nodes, hosts or servers, in a flexible manner. In other words, division of labor may vary case by case. One possible use is to make a network node deliver local content. One or more functionalities may also be implemented as virtual application(s) in software that can run on a server.

A user device or UE 910 may be any electronic device capable of M2M communication, and capable of supporting an MTC application. Although many of the above embodiment have referred to UEs as MTC UEs, the UE may be any other type of UE or user device. For example, a user equipment may be a mobile station (MS) such as a mobile phone or smart phone or multimedia device, a computer, such as a tablet, provided with wireless communication capabilities, personal data or digital assistant (PDA) provided with wireless communication capabilities, portable media player, digital camera, pocket video camera, navigation unit provided with wireless or wired communication capabilities or any combinations thereof. In other embodiments, the user equipment may be replaced with a machine communication device that does not require any human interaction, such as a sensor or a meter.

In some embodiments, an apparatus, such as a network entity, may include means for carrying out embodiments described above in relation to Figures 1 , 2, 3, 4, 5A, 5B, 5C, 5D, 6, 7, and 8. In certain embodiments, at least one memory including computer program code can be configured to, with the at least one processor, cause the apparatus at least to perform any of the processes described herein.

According to certain embodiments, an apparatus 910 may include at least one memory 912 including computer program code, and at least one processor 911. The at least one memory 912 and the computer program code are configured, with the at least one processor 911 , to cause the apparatus 910 at least to receive at a user equipment a signal comprising a radio configuration time trace parameter from a base station. The radio configuration time trace parameter defines future, time-limited radio configuration options for a UE. The at least one memory 912 and the computer program code are configured, with the at least one processor 911 , to also cause the apparatus 910 at least to determine at the UE a radio access action based on the received radio configuration options. In addition, the at least one memory 912 and the computer program code are configured, with the at least one processor 911, to cause the apparatus 910 at least to use the radio configuration options to carry out the determined radio access action.

According to certain embodiments, an apparatus 920 may include at least one memory 922 including computer program code, and at least one processor 921. The at least one memory 922 and the computer program code are configured, with the at least one processor 921, to cause the apparatus 920 at least to generate at a base station a radio configuration time trace parameter. The radio configuration time trace parameter defines future, time-limited radio configuration options for a UE. The at least one memory 922 and the computer program code are configured, with the at least one processor 921 ,to also cause the apparatus 920 at least to signal the radio configuration time trace parameter to the user equipment.

Processors 911 and 921 may be embodied by any computational or data processing device, such as a central processing unit (CPU), digital signal processor (DSP), application specific integrated circuit (ASIC), programmable logic devices (PLDs), field programmable gate arrays (FPGAs), digitally enhanced circuits, or comparable device or a combination thereof. The processors may be implemented as a single controller, or a plurality of controllers or processors.

For firmware or software, the implementation may include modules or unit of at least one chip set (for example, procedures, functions, and so on). Memories 912 and 922 may independently be any suitable storage device, such as a non-transitory computer- readable medium. A hard disk drive (HDD), random access memory (RAM), flash memory, or other suitable memory may be used. The memories may be combined on a single integrated circuit as the processor, or may be separate therefrom. Furthermore, the computer program instructions may be stored in the memory and which may be processed by the processors can be any suitable form of computer program code, for example, a compiled or interpreted computer program written in any suitable programming language. The memory or data storage entity is typically internal but may also be external or a combination thereof, such as in the case when additional memory capacity is obtained from a service provider. The memory may be fixed or removable.

The memory and the computer program instructions may be configured, with the processor for the particular device, to cause a hardware apparatus such as base station 920 or UE 910, to perform any of the processes described above (see, for example, Figures 1 , 2, 3, 4, 5A, 5B, 5C, 5D, 6, 7, and 8). Therefore, in certain embodiments, a non- transitory computer-readable medium may be encoded with computer instructions or one or more computer program (such as added or updated software routine, applet or macro) that, when executed in hardware, may perform a process such as one of the processes described herein. Computer programs may be coded by a programming language, which may be a high-level programming language, such as objective-C, C, C++, C#, Java, etc.. or a low-level programming language, such as a machine language, or assembler. Alternatively, certain embodiments may be performed entirely in hardware.

Furthermore, although Figure 9 illustrates a system including a base station 920 and UE 910, certain embodiments may be applicable to other configurations, and configurations involving additional elements, as illustrated and discussed herein. For example, multiple user equipment devices and multiple network entities may be present, or other nodes providing similar functionality, such as nodes that combine the functionality of a user equipment and an network entity, such as a relay node. The UE 910 may likewise be provided with a variety of configurations for communication other than communication base station 920. For example, the UE 910 may be configured for device- to-device communication.

Certain embodiments may utilize future, time-limited radio configuration options to reduce the signaling overhead of traditional RRC configuration and setup, as well as of traditional scheduling signals for at least one MTC UE. The radio configuration options may be used to extend the battery life of the MTC UE, and reduce the resource data usage of the MTC UE and base station. In some embodiments, the configurations may also be used to adjust the transmission power levels of the UE to reduce potential interference.

The features, structures, or characteristics of certain embodiments described throughout this specification may be combined in any suitable manner in one or more embodiments. For example, the usage of the phrases "certain embodiments," "some embodiments," "other embodiments." or other similar language, throughout this specification refers to the fact that a particular feature, structure, or characteristic described in connection with the embodiment may be included in at least one embodiment of the present invention.

One having ordinary skill in the art will readily understand that the invention as discussed above may be practiced with steps in a different order, and/or with hardware elements in configurations which are different than those which are disclosed, alas within the scope of the appended claims. While some embodiments may be directed to a 5G environment, other embodiments can be directed to any present or future LTE environment.

### Partial Glossary

5G 5th Generation
3GPP Third generation partnership project
CN Core network (entity)
eNB Enhanced node B (LTE base station)
EPS Evolved Packet System
ID Identifier
LTE Long Term Evolution
MEC mobile Edge Computing
MTC Machine Type Communication
mMTC massive MTC (5G NR)
PC Power Control
RA Radio access
RACTT Radio Activity Configuration time trace
RAN Radio access network
RCTT Radio Configuration time trace
SIB System Information Block
UE User Equipment

## Claims

1. A method comprising:
receiving (710) at a user equipment (910) a signal comprising a radio configuration time trace parameter from a base station (920), wherein the radio configuration time trace parameter defines a sequence or list of future, time-limited radio configurations to be used by the user equipment during time steps of a time period;
for a time step amongst the time steps, determining (720) at the user equipment a radio access action to be carried out by the user equipment based on a comparison between a value generated by the user equipment and a threshold value for the time step received in the radio configuration time trace parameter, wherein the radio access action comprises triggering an uplink radio access; and
using (740) the radio configurations to carry out the determined radio access action.

2. The method according to claim 1, wherein the radio configuration time trace parameter is valid for at least a set of user equipment or a sub-set of user equipment to which the user equipment (910) belongs.

3. The method according to claim 1 or claim 2, wherein the time limits of the radio configurations indicate a time period in which the radio access configuration is valid, and wherein the radio configurations are updated before the time period expires.

4. The method according to any of the preceding claims, wherein the time limit is pre-defined and comprises at least one of a start time or a stop time.

5. The method according to any of the preceding claims, wherein the user equipment comprises a machine type communication user equipment.

6. The method according to any of the preceding claims, further comprising:
determining by the user equipment at least when the radio configurations are refreshed at a future time or for how long the radio configurations are valid.

7. A method comprising:
generating at a base station (920) a radio configuration time trace parameter, wherein the radio configuration time trace parameter defines a sequence or list of future, time-limited radio configurations to be used by a user equipment (910) during time steps of a time period in determining a radio access action, wherein the radio access action comprises triggering an uplink radio access; and
signaling the radio configuration time trace parameter to the user equipment, wherein the signaling comprises sending a threshold value for a time step of the time steps for the user equipment to compare with a value generated by the user equipment for the time step to determine whether to carry out the radio access action.

8. The method according to claim 7, further comprising:
setting at the base station (920) a periodicity of the time-limited radio configurations.

9. The method according to claim 7 or claim 8, further comprising:
adjusting a transmission power of the user equipment based on the expected uplink interference.

10. A non-transitory computer-readable medium encoding instructions that, when executed in hardware of a user equipment, cause the user equipment to perform a process according to any of claims 1-6.

11. A non-transitory computer-readable medium encoding instructions that, when executed in hardware of a base station, cause the base station to perform a process according to any of claims 7-9.

12. A user equipment apparatus (910) comprising means for performing a process according to any of claims 1-6.

13. A base station apparatus (920) comprising means for performing a process according to any of claims 7-9.

## Patentansprüche

1. Verfahren, das Folgendes umfasst:
Empfangen (710) eines Signals, das einen Funkauslegungszeitverfolgungsparameter umfasst, an einer Teilnehmereinrichtung (910) von einer Basisstation (920), wobei der Funkauslegungszeitverfolgungsparameter eine Sequenz oder Liste von künftigen zeitlich begrenzten Funkauslegungen definiert, die von der Teilnehmereinrichtung während Zeitschritten einer Zeitperiode zu verwenden sind;
für einen Zeitschritt unter den Zeitschritten Bestimmen (720) eines Funkzugangsvorgangs an der Teilnehmereinrichtung, der von der Teilnehmereinrichtung auf Basis eines Vergleichs zwischen einem Wert, der von der Teilnehmereinrichtung erzeugt wird, und einem Schwellwert für den Zeitschritt, der im Funkauslegungszeitverfolgungsparameter empfangen wird, vorzunehmen ist, wobei der Funkzugangsvorgang das Auslösen eines Uplinkfunkzugangs umfasst; und
Verwenden (740) der Funkauslegungen, um den bestimmten Funkzugangsvorgang vorzunehmen.

2. Verfahren nach Anspruch 1, wobei der Funkauslegungszeitverfolgungsparameter für mindestens einen Satz von Teilnehmereinrichtungen oder einen Untersatz von Teilnehmereinrichtungen gültig ist, zu denen die Teilnehmereinrichtung (910) gehört.

3. Verfahren nach Anspruch 1 oder Anspruch 2, wobei die Zeitgrenzen der Funkauslegungen eine Zeitperiode anzeigen, in der die Funkzugangsauslegung gültig ist, und wobei die Funkauslegungen aktualisiert werden, bevor die Zeitperiode abläuft.

4. Verfahren nach einem der vorhergehenden Ansprüche, wobei die Zeitgrenzen vordefiniert ist und mindestens eines von einer Startzeit oder einer Endzeit umfasst.

5. Verfahren nach einem der vorhergehenden Ansprüche, wobei die Teilnehmereinrichtung eine Teilnehmereinrichtung für Maschinenkommunikation umfasst.

6. Verfahren nach einem der vorhergehenden Ansprüche, das ferner Folgendes umfasst:
Bestimmen durch die Teilnehmereinrichtung mindestens von dem, wann die Funkauslegungen zu einer künftigen Zeit aktualisiert werden oder wie lange die Funkauslegungen gültig sind.

7. Verfahren, das Folgendes umfasst:
Erzeugen eines Funkauslegungszeitverfolgungsparameters an einer Basisstation (920), wobei der Funkauslegungszeitverfolgungsparameter eine Sequenz oder Liste für künftige zeitlich begrenzte Funkauslegungen definiert, die von einer Teilnehmereinrichtung (910) während Zeitschritten einer Zeitperiode beim Bestimmen eines Funkzugangsvorgangs zu verwenden sind, wobei der Funkzugangsvorgang das Auslösen eines Uplinkfunkzugangs umfasst; und
Signalisieren des Funkauslegungszeitverfolgungsparameters an die Teilnehmereinrichtung, wobei das Signalisieren das Senden eines Schwellwerts für einen Zeitschritt der Zeitschritte für die Teilnehmereinrichtung zum Vergleichen mit einem Wert, der von der Teilnehmereinrichtung für den Zeitschritt erzeugt wird, umfasst, um zu bestimmen, ob der Funkzugangsvorgang vorgenommen werden soll.

8. Verfahren nach Anspruch 7, das ferner Folgendes umfasst:
Einstellen einer Periodizität der zeitlich begrenzten Funkauslegungen an der Basisstation (920).

9. Verfahren nach Anspruch 7 oder Anspruch 8, das ferner Folgendes umfasst:
Anpassen einer Sendeleistung der Teilnehmereinrichtung auf Basis der erwarteten Uplinkstörung.

10. Nichttransitorisches computerlesbares Medium, auf dem Anweisungen codiert sind, die, wenn sie in Hardware einer Teilnehmereinrichtung ausgeführt werden, die Teilnehmereinrichtung veranlassen, einen Prozess nach einem der Ansprüche 1-6 durchzuführen.

11. Nichttransitorisches computerlesbares Medium, auf dem Anweisungen codiert sind, die, wenn sie in Hardware einer Basisstation ausgeführt werden, die Basisstation veranlassen, einen Prozess nach einem der Ansprüche 7-9 durchzuführen.

12. Teilnehmereinrichtungsvorrichtung (910), die Mittel zum Durchführen eines Prozesses nach einem der Ansprüche 1-6 umfasst.

13. Basisstationsvorrichtung (920), die Mittel zum Durchführen eines Prozesses nach einem der Ansprüche 7-9 umfasst.

## Revendications

1. Procédé comprenant :
la réception (710), au niveau d'un équipement utilisateur (910), d'un signal comprenant un paramètre de trace temporelle de configuration radio provenant d'une station de base (920), dans lequel le paramètre de trace temporelle de configuration radio définit une séquence ou une liste de futures configurations radio limitées dans le temps à utiliser par l'équipement utilisateur à des étapes temporelles d'une période de temps ;
à une étape temporelle parmi les étapes temporelles, la détermination (720), au niveau de l'équipement utilisateur, d'une action d'accès radio à effectuer par l'équipement utilisateur sur la base d'une comparaison entre une valeur générée par l'équipement utilisateur et une valeur de seuil à l'étape temporelle reçue dans le paramètre de trace temporelle de configuration radio, dans lequel l'action d'accès radio comprend le déclenchement d'un accès radio de liaison montante ; et
l'utilisation (740) des configurations radio pour effectuer l'action d'accès radio déterminée.

2. Procédé selon la revendication 1, dans lequel le paramètre de trace temporelle de configuration radio est valable pour au moins un ensemble d'équipements utilisateur ou un sousensemble d'équipements utilisateur auquel l'équipement utilisateur (910) appartient.

3. Procédé selon la revendication 1 ou la revendication 2, dans lequel les limites temporelles des configurations radio indiquent une période de temps dans laquelle la configuration d'accès radio est valable, et dans lequel les configurations radio sont mises à jour avant l'expiration de la période de temps.

4. Procédé selon l'une quelconque des revendications précédentes, dans lequel la limite temporelle est prédéfinie et comprend au moins l'un parmi une heure de début ou une heure de fin.

5. Procédé selon l'une quelconque des revendications précédentes, dans lequel l'équipement utilisateur comprend un équipement utilisateur de communication de type machine.

6. Procédé selon l'une quelconque des revendications précédentes, comprenant en outre :
la détermination, par l'équipement utilisateur, d'au moins le moment où les configurations radio seront rafraîchies à un moment ultérieur, ou de la durée de la validité des configurations radio.

7. Procédé comprenant :
la génération, au niveau d'une station de base (920), d'un paramètre de trace temporelle de configuration radio, dans lequel le paramètre de trace temporelle de configuration radio définit une séquence ou une liste de futures configurations radio limitées dans le temps à utiliser par un équipement utilisateur (910) à des étapes temporelles d'une période de temps dans la détermination une action d'accès radio, dans lequel l'action d'accès radio comprend le déclenchement d'un accès radio de liaison montante ; et
la signalisation du paramètre de trace temporelle de configuration radio à l'équipement utilisateur, dans lequel la signalisation comprend l'envoi d'une valeur de seuil à une étape temporelle des étapes temporelles pour l'équipement utilisateur pour la comparer avec une valeur générée par l'équipement utilisateur à l'étape temporelle afin de déterminer s'il faut effectuer l'action d'accès radio.

8. Procédé selon la revendication 7, comprenant en outre :
le réglage, au niveau de la station de base (920), d'une périodicité des configurations radio limitées dans le temps.

9. Procédé selon la revendication 7 ou la revendication 8, comprenant en outre :
le réglage d'une puissance d'émission de l'équipement utilisateur sur la base de l'interférence de liaison montante attendue.

10. Support non transitoire lisible par ordinateur codant des instructions qui, lorsqu'elles sont exécutées dans le matériel d'un équipement utilisateur, amènent l'équipement utilisateur à réaliser un processus selon l'une quelconque des revendications 1 à 6.

11. Support non transitoire lisible par ordinateur codant des instructions qui, lorsqu'elles sont exécutées dans le matériel d'une station de base, amènent la station de base à réaliser un processus selon l'une quelconque des revendications 7 à 9.

12. Appareil d'équipement utilisateur (910) comprenant des moyens pour réaliser un processus selon l'une quelconque des revendications 1 à 6.

13. Appareil de station de base (920) comprenant des moyens pour réaliser un processus selon l'une quelconque des revendications 7 à 9.
